# EUROPEAN PATENT APPLICATION

(11) **EP 4 554 239 A1**
(43) Date of publication of application: **14.05.2025**
(21) Application number: 23834607.6
(22) Date of filing: 14.06.2023
(51) Int. Cl.: H04N 21/485

(54) **VIDEO PLAYING METHOD AND APPARATUS, AND DEVICE AND STORAGE MEDIUM**

(30) Priority: 07.07.2022 CN 202210803596
(71) Applicant: Beijing Zitiao Network Technology Co., Ltd., Beijing 100190 (CN)
(72) Inventor: CHEN, Shiyun, Beijing 100028 (CN); WANG, Yiming, Beijing 100028 (CN); XIANG, Wangtao, Beijing 100028 (CN); ZHANG, Fan, Beijing 100028 (CN); XIE, Zhiyang, Beijing 100028 (CN)
(74) Representative: Dentons UK and Middle East LLP
(86) International application number: PCT/CN2023/100181
(87) International publication number: WO 2024/007833

(57) **Abstract**

A video playing method and apparatus, and a device and a storage medium. The method comprises: displaying a target music page corresponding to target music, wherein the target music page comprises a video recommendation control; and in response to a trigger operation acting on the video recommendation control, playing a first video on the video recommendation page, wherein first background music in the first video is similar music that matches the target music in a preset music dimension.

## Description

The present application claims priority to Chinese Patent Application No. 202210803596.3 filed on July 7, 2022 by the Chinese Patent Office, the entire contents of which are incorporated herein by reference.

### TECHNICAL FIELD

Embodiments of the present disclosure relate to computer technology, for example, to a video playing method, apparatus, device and storage medium.

### BACKGROUND

With the rapid development of mobile Internet, more and more users prefer to watch videos on video platforms. Tens of millions of videos are authored and disseminated every day on a video platform. Often, there will be background music to the video to improve the attractiveness and viewing experience of the video. In the prior art, when a user is interested in a music, the user is required to manually search for videos related to the music, degrading the user experience.

### SUMMARY

The present disclosure provides a video playing method, apparatus, device and storage medium to quickly play a video with similar background music, without manual search, enhancing interactivity with users, and improving user experience.

An embodiment of the present disclosure provides a video playing method, including:
presenting a target music page corresponding to target music, wherein the target music page comprises a video recommendation control;
in response to a trigger operation acting on the video recommendation control, playing a first video in a video recommendation page, wherein first background music in the first video is similar music that matches the target music in a preset music dimension.

The embodiment of the present disclosure further provides a video playing apparatus, including:
a target music page presentation module, configured to present a target music page corresponding to target music, wherein the target music page comprises a video recommendation control;
a first video playing module, configured to play a first video in a video recommendation page in response to a trigger operation acting on the video recommendation control, wherein first background music in the first video is similar music matching the target music in a preset music dimension.

An embodiment of the present disclosure further provides an electronic device, which includes:
one or more processors;
a storage apparatus configured to store one or more programs;
when the one or more programs are executed by the one or more processors, the one or more processors are caused to implement the video playing method according to any one of the embodiments of the present disclosure.

The embodiments of the present disclosure further provide a storage medium including computer-executable instructions, when executed by a computer processor, for executing the video playing method according to any one of the embodiments of the present disclosure.

### BRIEF DESCRIPTION OF DRAWINGS

Throughout the drawings, the same or similar reference numerals refer to the same or similar elements. It should be understood that the figures are schematic and that components and elements are not necessarily drawn to scale.
Fig. 1 is a flow schematic diagram of a video playing method provided by an embodiment of the present disclosure;
Fig. 2 is an example of a video playing process according to an embodiment of the present disclosure.
Fig. 3 is an example of another video playing process according to an embodiment of the present disclosure;
Fig. 4 is an example of a playlist presentation according to an embodiment of the present disclosure;
Fig. 5 is an example of yet another video playing process according to an embodiment of the present disclosure;
Fig. 6 is a flow schematic diagram of another video playing method provided by an embodiment of the present disclosure;
Fig. 7 is an example of a video switching process according to an embodiment of the present disclosure;
Fig. 8 is an example of another video switching process according to an embodiment of the present disclosure;
Fig. 9 is an example of yet another video switching process according to an embodiment of the present disclosure;
Fig. 10 is a flow schematic diagram of another video playing method provided by an embodiment of the present disclosure;
Fig. 11 is a structural schematic diagram of a video playing apparatus provided by an embodiment of the present disclosure;
Fig. 12 is a structural schematic diagram of an electronic device provided by an embodiment of the present disclosure.

### DETAILED DESCRIPTION

Embodiments of the present disclosure will be described below with reference to the accompanying drawings. The drawings and embodiments of the present disclosure are for exemplary purposes only, and are not intended to limit the scope of protection of the present disclosure.

It should be understood that the multiple steps recited in the method implementation of the present disclosure may be performed in a different order, and/or in parallel. Further, the method implementation may include additional steps and/or omit performing illustrated steps. The scope of the present disclosure is not limited in this regard.

As used herein, the term "include" and variations thereof are open inclusion, that is, "including, but not limited to". The term "based on" is "based at least in part on". The term "one embodiment" means "at least one embodiment"; the term "another embodiment" means "at least one additional embodiment"; the term "some embodiments" means "at least some embodiments". Relevant definitions for other terms will be given in the description below.

Note that the concepts of "first", "second", and the like mentioned in the present disclosure are used only to distinguish different apparatuses, modules, or units, and are not used to limit the order or interdependence of functions performed by these apparatuses, modules, or units.

It is noted that the modifications referred to in the present disclosure as "a", "a plurality of" are illustrative rather than limiting, and those skilled in the art should understand that it should be understood as "one or more" unless the context clearly dictates otherwise.

The names of messages or information interacted between devices in an implementation of the present disclosure are for illustrative purposes only and are not intended to limit the scope of such messages or information.

It can be understood that before using the technical solutions disclosed by the embodiments of the present disclosure, the user should be informed of the type, the use range, the use scenario, and the like of the personal information to which the present disclosure relates and the user's authorization should be obtained in an appropriate manner in accordance with the relevant laws and regulations.

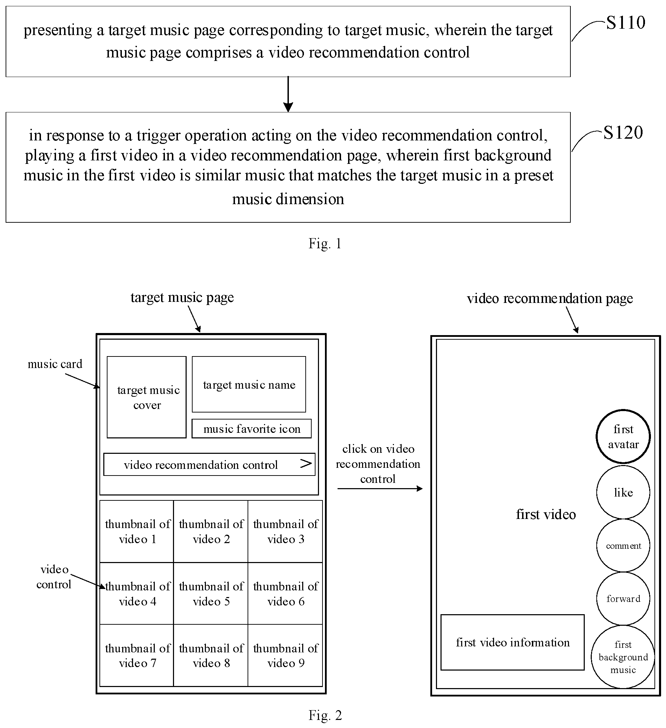

Fig. 1 is a flowchart diagram of a video playing method provided by an embodiment of the present disclosure, which is applicable to a case that after selecting a music for a user, a video having music similar to the music as background music is played. The method may be performed by a video playing apparatus, the apparatus may be implemented by the form of software and/or hardware, optionally, by an electronic device, which may be a mobile terminal, a Personal Computer (PC) end, or a server, etc.

As shown in Fig. 1, the video playing method includes the following steps:

S110, presenting a target music page corresponding to target music, wherein the target music page comprises a video recommendation control.

The target music may refer to an arbitrary piece of music, i.e., the music of interest selected by the user. For example, if a user is interested in background music in a video currently watching, the background music may be taken as the target music by triggering a selection operation on the background music. The target music page may be a page for presenting details of the target music. For example, the target music page may refer to a detail page of the target music. A video recommendation control may be provided in the target music page for recommending to the user videos having background music similar to the target music. For example, the video recommendation control may be a view recommendation button in the form of a button. The video recommendation control may be located at any position in the target music page, and the present embodiment does not limit the presentation position of the video recommendation control.

The present application can present a target music page in response to a user's trigger operation on the target music, such as a click operation on background music in a currently played video page.

For example, the target music page may further include a music card and at least one video control in addition to the video recommendation control. The music card may be used to present the target music information corresponding to the target music. The target music information may include but is not limited to: a target music name, a target music cover and target music creator information. Each video control may be used to present a video thumbnail corresponding to a video with the target music as background music, so as to play out the corresponding video by triggering the video thumbnail.

For example, the video recommendation control may be a control located in the music card. The video recommendation control may be located anywhere in the music card, and the location of the video recommendation control may be set based on business needs. For example, the video recommendation control may be located in a banner position at the top or bottom of the music card. Fig. 2 shows an example of a video playing process. As shown in Fig. 2, the video recommendation control is located at the bottom banner position of the music card.

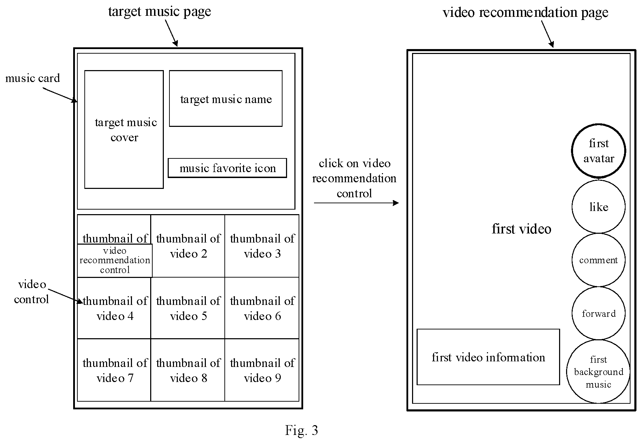

For example, the video recommendation control may also be a sub-control nested in the preset video control. The preset video control may be a video control set in advance for presenting the video recommendation information. For example, the first video control in the target music page can be taken as the preset video control. Fig. 3 shows an example of another video playing process. As shown in Fig. 3, the video recommendation control can be presented nested in the first video control in the target music page.

S210, in response to a trigger operation acting on the video recommendation control, playing a first video in a video recommendation page, wherein first background music in the first video is similar music that matches the target music in a preset music dimension.

The first background music refers to background music in the first video. The first background music matches the target music in a preset music dimension, that is, the first background music is music similar to the target music. The preset music dimension may be set in advance for identifying a matching dimension of a music similarity degree. For example, the preset music dimension may include, but is not limited to, at least one of a music using way dimension, a music style dimension, or a music creator dimension. The music using way dimension may refer to the way of matching a music similarity degree from the music using way. Music using way may refer to how music is rendered when used by a video. For example, a piece of music may be used as background music in a finger dance video, and the user may use the piece of music to capture the same finger dance video in a follow-up way, so that the piece of music is given the usage way of the piece of music to capture a finger dance video. If there is another music that can also take a finger dance video, it indicates that the other music is also given a usage way to take a finger dance video, so that the two music can be treated as similar music in the music using way dimension. The music style dimension may refer to a way of matching a music similarity degree from the style type that the music has. Music styles may include: hip hop, rap, rock, rhythm Bruce, electronic music, and the like. The music creator dimension may refer to a way of matching a music similarity degree from the music creator. The music creator may include at least one of a singer, a lyricist, and a composer. The video recommendation page may be used to play a video with background music similar to the target music. The video recommendation page is different from the target music page in that the video recommendation page utilizes a separately presented page for video recommendations to improve the user viewing experience.

If the user wants to watch a video with similar background music, a trigger operation may be performed on the video recommendation control, such as clicking on the video recommendation control. As shown in Fig. 2 and Fig. 3, the client may play the first video with similar background music in the video recommendation page in response to the trigger operation acting on the video recommendation control, so that the user can quickly watch the first video with music similar to the target music as background music without the user's manual search, enhancing interactivity with the user, and improving user viewing experience.

When playing the first video, the first video may be automatically played out on the video recommendation page, or the first video may also be presented first, and in response to a playing operation triggered by the user for the presented first video, playing the first video, so as to meet different playing demands of the user.

The technical solution of the embodiments of the present disclosure, by presenting a target music page corresponding to target music, the target music page including a video recommendation control, and in response to a trigger operation acting on the video recommendation control, playing a first video in the video recommendation page, first background music in the first video being similar music matching the target music in a preset musical dimension, so that a video with background music similar to the target music can be played out quickly by triggering the video recommendation control in the target music page, without manual search, enhancing interactivity with users, and improving user viewing experience.

On the basis of the above technical solution, the method may further include: in response to a trigger operation acting on a target video thumbnail in the target video control, playing a target video corresponding to the target video thumbnail, wherein a first playlist control is included in a playing page of the target video; in response to a trigger operation on the first playlist control, presenting a playlist, wherein each music in the playlist is similar music that matches the target music in the preset music dimension.

The target video control can refer to a video control currently triggered by the user in the target music page. The target video thumbnail refers to the video thumbnail shown by the target video control. The first playlist control may be a control set in advance on a playing page of the target video for presenting a playlist. For example, the first ticket control may be a ticket button in the form of a drop-down box control or button. The first playlist control may be presented at any position in the playing page of the target video, and the present embodiment does not limit the presentation form and presentation position of the first playlist control. The playlist may include all similar music that matches the target music in a preset music dimension.

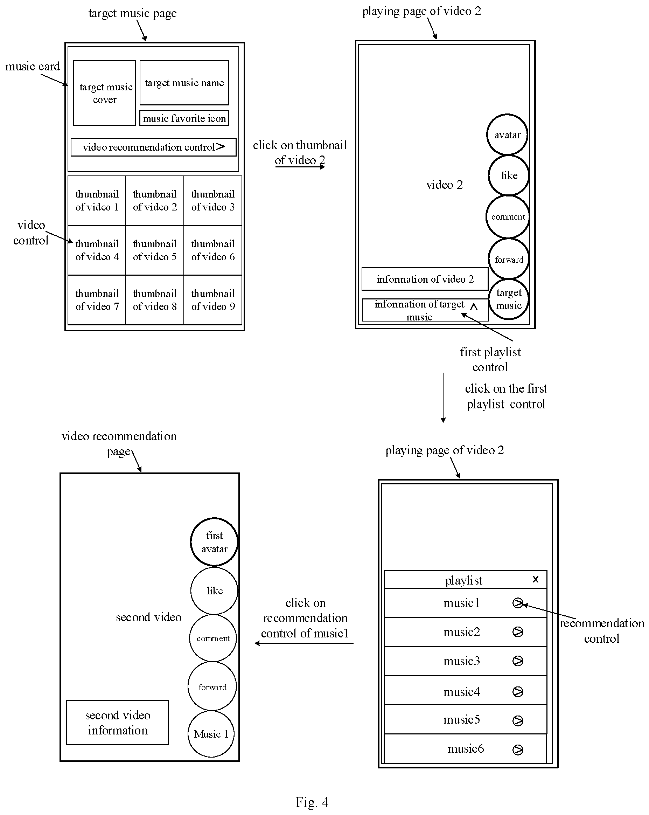

Fig. 4 shows an example of a playlist presentation. As shown in Fig. 4, after the user clicks on the video 2 thumbnail in the target music page, the target video (i.e., video 2) corresponding to the target video thumbnail can be played out in response to a trigger operation acting on the target video thumbnail (i.e., video 2 thumbnail) in the target video control, the background music in the video 2 is the target music, so that different videos having the target music as the background music can be played out by triggering different video thumbnails on the target music page. As shown in Fig. 4, a first playlist control that can be triggered is presented below the video 2 information, and the information of the target music is presented in the first playlist control to prompt the user of the information of the background music in the currently playing video 2. The client may, in response to a trigger operation acting on the first playlist control, such as an operation of the user clicking the first playlist control, present a playlist consisting of all similar music corresponding to the target music on the playing page of the target video (i.e., video 2), so that the user can quickly learn all similar music. If the number of similar music in the playlist is greater than the maximum number of presentations of the play page, some of the similar music may be presented and the rest of the similar music may be presented by flipping or swiping the playlist. The similar music in the playlist may be arranged based on the magnitude of the similarity with the target music, such as ranking the similar music with the greatest similarity at the top, so that the similar music with greater similarity may be preferentially displayed, thereby improving the user experience.

For example, presenting the playlist may include: presenting target music in the playlist based on a first presentation mode; Other music in the playlist is presented based on a second presentation mode different from the first presentation mode. Wherein, the other music refers to music remaining in the playlist except for the target music.

For example, the target music and the other music are displayed in different presentation modes in the playlist, for example, the target music is highlighted and the other music is grayscale displayed, or the target music and the other music are displayed in different presentation colors, so that the target music can be highlighted to be distinguished from the other music, thereby making the user know in time that the music displayed in the playlist in the first presentation mode is the target music, further improving the user's viewing experience.

For example, after presenting the playlist, the method may further include: playing a second video in the video recommendation page in response to a trigger operation of a first recommendation control acting on a first music in the playlist, wherein second background music in the second video is the first music.

The first music may refer to any music in the playlist. Each music in the playlist corresponds to a recommendation control, as shown in Fig. 4. The first recommendation control refers to a recommendation control corresponding to the first music. The recommendation control may be set in advance for recommending a video with the specified music as background music.

For example, a user may click on a first recommendation control corresponding to a first music to be played, such as the recommendation control corresponding to Music 1 in Fig. 4, and a second video with Music 1 as the background music may be played in the video recommendation page, so that by triggering the recommendation control in the playlist, the video recommendation page may be quickly entered and the second video with the triggered similar music as the background music may be played on the video recommendation page.

On the basis of the above technical solutions, the video recommendation page may include: a second playlist control. Accordingly, the method may further include: in response to a trigger operation on the second playlist control, presenting a playlist, wherein each music in the playlist is similar music that matches the target music in the preset music dimension.

The second playlist control is similar to the first playlist control, each being a control for presenting a playlist. The second playlist control differs from the first playlist control in that the second playlist control is located in a video recommendation page, while the first playlist control is located in a regular video playing page. For example, the second playlist control may also be a playlist button in the form of a drop-down box control or button. The second playlist control may be presented at any position in the video recommendation page, and the present embodiment does not limit the presentation form and presentation position of the second playlist control.

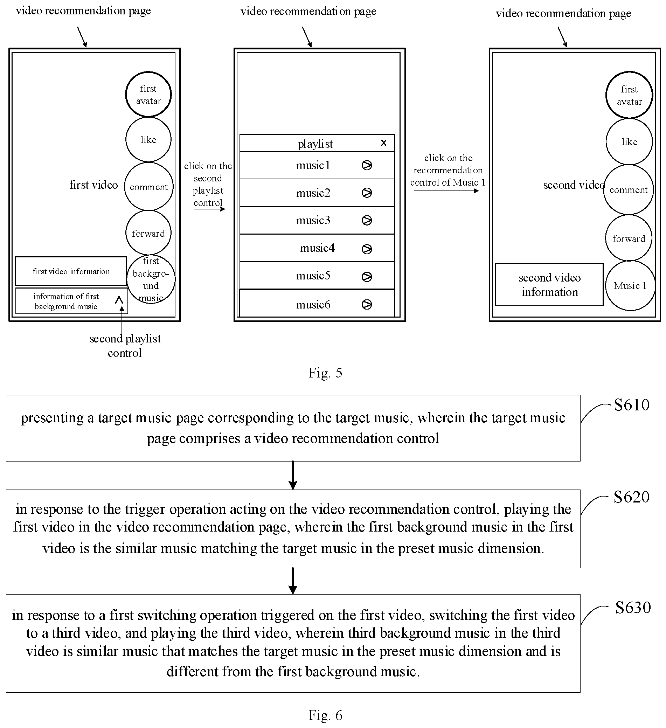

Fig. 5 is an example of yet another video playing process according to an embodiment of the present disclosure. As shown in Fig. 5, a second playlist control that is triggerable is presented below the first video information in the video recommendation page, and information of the first background music is presented in the second playlist control to prompt the user of the information of the background music in the currently playing first video. The client may, in response to a trigger operation on the second playlist control, such as an operation by the user clicking on the second playlist control, present a playlist consisting of all similar music corresponding to the target music on the video recommendation page, so that the user can quickly learn all similar music. For example, each music in the playlist also corresponds to a recommendation control, and the user may click on the first recommendation control corresponding to the first music desired to be played, e.g., after clicking on the recommendation control corresponding to Music 1 in Fig. 5, a second video with Music 1 as background music may be played in the video recommendation page, so that by triggering the recommendation control in the playlist, the second video with the similar music triggered as background music may be quickly played out on the video recommendation page, thereby improving the user experience.

Fig. 6 is a flow schematic diagram of another video playing method provided by an embodiment of the present disclosure. a video switching process for different similar background music is described on the basis of the above disclosed embodiment. Explanations of terms therein identical or corresponding to the above-described plurality of disclosed embodiments are not repeated herein.

As shown in Fig. 6, the video playing method includes the following steps:

S610, presenting a target music page corresponding to the target music, wherein the target music page comprises a video recommendation control.

S620, in response to the trigger operation acting on the video recommendation control, playing the first video in the video recommendation page, wherein the first background music in the first video is the similar music matching the target music in the preset music dimension.

S630, in response to a first switching operation triggered on the first video, switching the first video to a third video, and playing the third video, wherein third background music in the third video is similar music that matches the target music in the preset music dimension and is different from the first background music.

The first switching operation may refer to an operation of switching videos having different similar background music. The third background music refers to background music in the third video. The third background music matches the target music in the preset music dimension, that is, the third background music is also music similar to the target music, but the third background music is different from the first background music. There are a plurality of similar music that match the target music in the preset music dimension. The first background music and the third background music are two different music of the plurality of similar music.

The user can trigger a first switching operation on the video recommendation page, and the client can switch a first video currently playing on the video recommendation page to a third video having different similar background music in response to the first switching operation triggered by the user. After switching to the third video, the third video may be automatically played, or the third video may be presented first, and the third video may be played in response to a playing operation triggered by the user with respect to the presented third video. The video with different similar background music may be played out quickly by triggering the first switching operation, so that the user can watch the video with different similar background music more conveniently, so that the user's watching demand for music similar to the target music and video with music similar to the target music as background music can be satisfied, and the video interaction habits on the platform are fitted, the interactivity with the user is enhanced, and the user's watching experience is improved.

For example, the first switching operation for videos having different similar background music may be implemented in at least two ways as follows: as an implementation mode, the "switching the first video to the third video in response to the first switching operation triggered on the first video" in S120 may include: switching the first video to the third video corresponding to the first preset direction in response to a swipe operation of the first preset direction triggered on the first video; or, in response to a swipe operation of a second preset direction on the first video, switching the first video to a third video corresponding to the second preset direction.

The first preset direction and the second preset direction may refer to two opposite swipe directions set in advance. For example, the swipe operation of the first preset direction is a swipe operation pointing left, and the swipe operation of the second preset direction is a swipe operation pointing right. Or, the swipe operation of the first preset direction is a swipe operation pointing right, and the swipe operation of the second preset direction is a swipe operation pointing left.

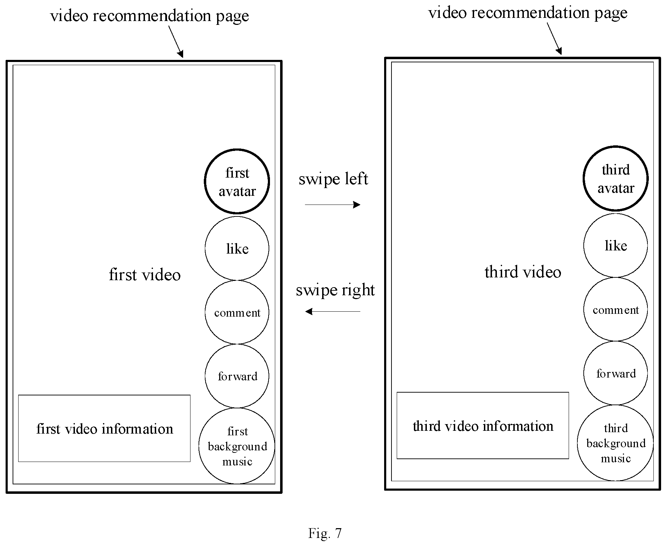

By triggering a swipe operation of different swipe directions on the video recommendation page, the first video may be switched to a third video matching the swipe direction. For example, Fig. 7 is an example of a video switching process. As shown in Fig. 7, the user may trigger a leftward swipe operation on the playing page of the first video to switch the first video with the first background music to a third video with the third background music different from the first background music, so that the user may switch videos with different similar background music by swiping left and right on the playing page of the first video.

For example, for the switching way of the swipe operation, besides the video, an avatar, a like button, a comment button, a forward button, a background music button and video information may be included on the playing page of each video. As shown in Fig. 7, the first avatar, a like button, a comment button, a forward button, a first background music button, and first video information may be included on the playing page of the first video in addition to the first video. The first avatar may refer to the author avatar that created the first video. The like button is a button for triggering a like of the first video. The comment button is a button for triggering a comment on the first video. The forward button is a button for triggering forwarding of the first video. The first background music button may be a button for viewing a first background music page. The first video information is information related to the first video. For example, the first video information may include: author account information that created the first video, creation time information, content information of the first video, and the like. Similarly, the playing page of the third video may include, in addition to the third video, a third avatar, a like button, a comment button, a forward button, a third background music button, and third video information.

As another implementation, the video recommendation page includes: a first switching control and a second switching control, wherein the first switching control and the second switching control correspond to different video switching directions. Accordingly, the "switching the first video to the third video in response to the first switching operation triggered on the first video" in S120 may include:
switching the first video to the third video corresponding to the first switching control in response to the trigger operation acting on the first switching control; or, in response to a trigger operation acting on the second switching control, switching the first video to a third video corresponding to the second switching control.

The first switching control and the second switching control are controls set in advance for switching videos with similar background music from different directions. The first switching control and the second switching control may each be a control in the form of a button. For example, the first switching control may refer to a previous button, and the second switching control may refer to a next button, so that by triggering the previous button, the previous piece of music of the first background music is taken as the third background music to be played out among the plurality of music similar to the target music. By triggering the next button, the next piece of music of the first background music is taken as the third background music to be played.

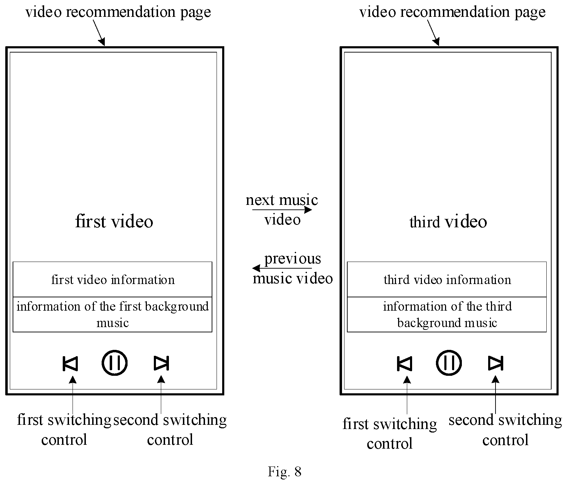

The user can switch videos with different similar background music by clicking on different switching controls on the video recommendation page. For example, the user may trigger the first switching operation by clicking on the first switching control, and the client switches the first video to a third video matching the switching direction of the first switching control in response to the trigger operation acting on the first switching control. Alternatively, the user may trigger the second switching operation by clicking on the second switching control, and the client switches the first video to a third video matching the switching direction of the second switching control in response to the trigger operation acting on the second switching control. For example, Fig. 8 shows an example of another video switching process. As shown in Fig. 8, the user may click on the second switching control on the video recommendation page, thereby switching the first video with the first background music to a third video with the next piece of music of the first background music as the third background music. Similarly, the user may also click on the first switch control on the playing page of the first video, thereby switching the first video with the first background music to the third video with the previous piece of music of the first background music as the third background music.

For example, the playing page of each video may include video information and information of background music in addition to the first switching control, the second switching control, and the video. As shown in Fig. 8, the playing page of the first video includes the first video information and the information of the first background music in addition to the first switching control, the second switching control, and the first video. The first video information is information related to the first video. For example, the first video information may include: author account information that created the first video, creation time information, content information of the first video, and the like. The information of the first background music may include a music name and creator information, and the like. Likewise, the playing page of the third video may include the third video information and the information of the third background music in addition to the first switching control, the second switching control and the third video.

The technical solution of the embodiments of the present disclosure, switching the first video to a third video and playing the third video in response to the first switching operation triggered on the first video, the third background music in the third video being similar music that matches the target music in the preset music dimension and being different from the first background music, so that the videos with different similar background music can be quickly played out by triggering the first switching operation, without manual search, further enhancing interactivity with the user, and improving the user viewing experience.

On the basis of the above technical solution, the method may further include: in response to a second switching operation triggered on the first video, switching the first video to a fourth video and playing the fourth video, wherein the background music in the fourth video is the first background music.

The second switching operation may refer to an operation of switching videos having the same similar background music. The background music in the fourth video is the same music as the first background music, that is, the fourth video and the first video are two different videos with the same background music.

The user may trigger a second switching operation on the video recommendation page, and the client may switch the first video currently playing on the video recommendation page to a fourth video with the same similar background music in response to the user-triggered second switching operation. After switching to the fourth video, the fourth video may be automatically played, or the fourth video may be presented first, and the fourth video may be played in response to a playing operation triggered by the user with respect to the presented fourth video. Other videos with the same similar background music can be played out quickly by triggering the second switching operation, so that the user can more conveniently watch different videos with the same background music, further enhancing interactivity with the user and improving the user viewing experience.

For example, switching the first video to the fourth video in response to a second switching operation triggered on the first video may include: switching the first video to a fourth video corresponding to a third preset direction in response to a swipe operation of the third preset direction triggered on the first video; or, in response to a swipe operation of a fourth preset direction triggered on the first video, switching the first video to a fourth video corresponding to the fourth preset direction.

The third preset direction and the fourth preset direction may refer to two opposite swipe directions set in advance. For example, the swipe operation of the third preset direction is a swipe operation pointing upwards, and the swipe operation of the fourth preset direction is a swipe operation pointing downward. Or, the swipe operation of the third preset direction is a swipe operation pointing downward, and the swipe operation of the fourth preset direction is a swipe operation pointing upwards.

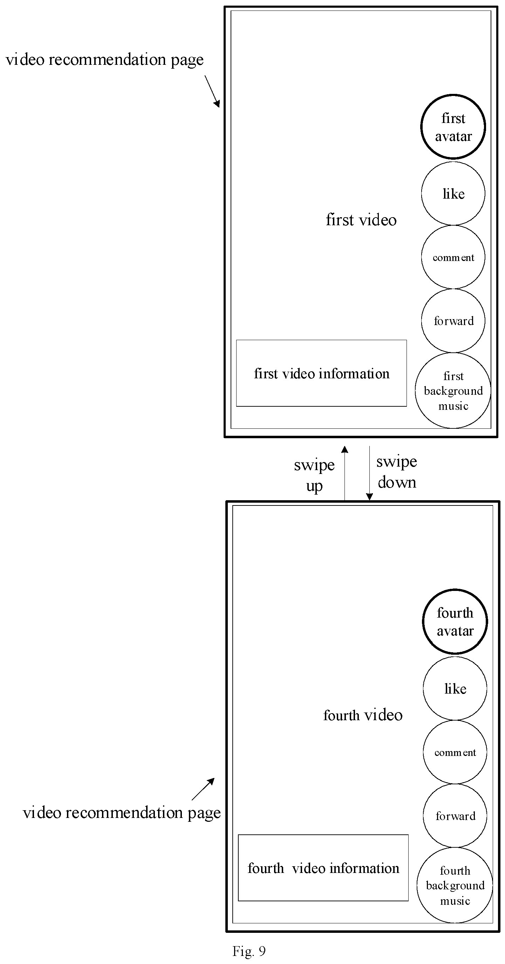

It is also possible on the video recommendation page to switch a first video currently playing on the video recommendation page to a fourth video matching the swipe direction by triggering a swipe operation of a different swipe direction, thereby quickly playing out different videos with the same background music. For example, Fig. 9 shows an example of yet another video switching process. As shown in Fig. 9, the user may trigger a downward swipe operation on the video recommendation page to switch a first video having a first background music to a fourth video also having the first background music, so that the user may switch different videos having the same background music by swiping up and down on the video recommendation page.

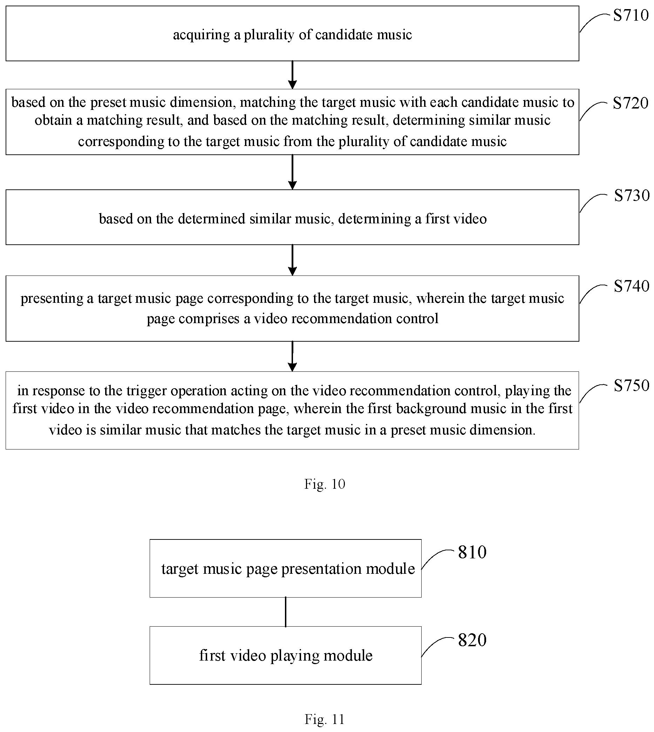

Fig. 10 is a flow schematic diagram of another video playing method provided by an embodiment of the present disclosure. A determination process of a first video is described based on the above disclosed embodiment. Explanations of terms therein identical or corresponding to the above-described plurality of disclosed embodiments are not repeated herein.

As shown in Fig. 10, the video playing method includes the following steps:
S710, acquiring a plurality of candidate music.

The candidate music may refer to music that needs to be matched with the target music. The present embodiment may take music in the music library other than the target music as the candidate music.

For example, when the preset music dimension is the music using way dimension, step S710 may include: screening out a plurality of to-be-selected music from the music library based on the music playback count corresponding to each music in the music library; based on the music playing information corresponding to each to-be-selected music, determining the candidate music having a common using way from the plurality of to-be-selected music.

The music may be played individually in a music library or by playing a video when the music is used as background music in the video. The music playback count may refer to the current total number of playing times of the music in the video platform. The to-be-selected music refers to music that may have a common using way. The music playing information corresponding to the to-be-selected music may include, but is not limited to: a video watching count corresponding to a video with the to-be-selected music as background music, the playback count when the to-be-selected music is played by way of playing the video, and contribution source information of the to-be-selected music.

If the music is played too few times, it indicates that the music is not hot, i.e., the number of videos shot by users using the music is too small, which makes the usage way of the music too small, and there is no common using way between the music and other music. If the music is played too many times, it indicates that the music is too hot, i.e., the videos shot by users using the music are too messy, which makes the music used in too many ways, and it is impossible to extract the common using way with other music. The music in the music library whose music playback count is within the preset playback count range is used as the to-be-selected music, so that all to-be-selected music that may have a common using way can be preliminarily selected. By screening out the to-be-selected music based on the music playing information corresponding to each to-be-selected music, the candidate music with common using way can be obtained, so as to obtain a more accurate music matching range in the music using way dimension and further improve the accuracy of music matching.

For example, based on the music play information corresponding to each to-be-selected music, determining candidate music having a common using way from the plurality of to-be-selected music, may include: acquiring the video watching count corresponding to a music page of each to-be-selected music; determining a target playing proportion corresponding to each to-be-selected music according to a target playback count and a total playback count corresponding to each to-be-selected music, wherein the target playback count refers to the number of playing times of playing the to-be-selected music through the music page corresponding to the to-be-selected music; determining a target contribution proportion corresponding to each to-be-selected music according to a target contribution quantity and a total contribution quantity corresponding to each to-be-selected music, wherein the target contribution quantity is a quantity of music contributions to the to-be-selected music by a preset music using way; determining the to-be-selected music is a candidate music having a common using way, in a case where the video watching count corresponding to the to-be-selected music is greater than a preset watching count, the target playing proportion is greater than a preset playing proportion, and the target contribution proportion is greater than a preset contribution proportion.

The video watching count may refer to the average number of video thumbnails triggered in the music page. For example, the video watching count refers to the average number of people watching the video in a music page. The target playback count may refer to the number of playing times that the to-be-selected music is played out by way of playing the video in the music page. The preset music using way may refer to a usage way of music set in advance, such as a way of following the music. The target contribution quantity is the quantity of music for which the contribution source is the preset music using way, such as the amount of follow-up on the music.

For each to-be-selected music, a ratio between the target playback count and the total playback count corresponding to the to-be-selected music may be taken as a target playing proportion corresponding to the to-be-selected music, and a ratio between the target contribution quantity and the total contribution quantity corresponding to the to-be-selected music may be taken as a target contribution proportion corresponding to the to-be-selected music, and when it is detected that the video watching count corresponding to the to-be-selected music is greater than a preset watching count, the target playing proportion is greater than a preset playing proportion, and the target contribution proportion is greater than a preset contribution proportion, the to-be-selected music may be determined as a candidate music having a common using way, Thus, all candidate music having a common using way can be screened out from a plurality of to-be-selected music.

S720, based on the preset music dimension, matching the target music with each candidate music to obtain a matching result, and based on the matching result, determining similar music corresponding to the target music from the plurality of candidate music.

When the preset music dimension is the music style dimension, the music style corresponding to each candidate music and the music style corresponding to the target music may be matched. If the musical style of the candidate music is the same as the musical style corresponding to the target music, the candidate music may be regarded as the similar music corresponding to the target music, i.e., the candidate music may be regarded as the music matching the target music, so that all similar music matching the target music in the musical style dimension can be screened out.

When the preset music dimension is the music creator dimension, the music creator corresponding to each candidate music and the music creator corresponding to the target music may be matched. If the music creator of the candidate music is the same as the music creator of the target music, the candidate music may be considered as the similar music corresponding to the target music, i.e., the candidate music may be considered as the music matching the target music, so that all similar music matching the target music in the music creator dimension may be screened out.

When the preset music dimension is the music using way dimension, S720 may include:
acquiring a first to-be-selected video having the target music as background music, and a second to-be-selected video having each candidate music as background music; based on video feature information of the first to-be-selected video corresponding to the target music, determining first video feature information corresponding to the target music; determining second video feature information corresponding to each candidate music based on the video feature information of the second to-be-selected video corresponding to each candidate music; determining a music similarity between the target music and each candidate music based on the first video feature information and the second video feature information; based on the music similarity, determining all similar music to which the target music corresponds from the plurality of candidate music.

The video feature information of the first to-be-selected video may include static characteristic information of the first to-be-selected video itself and dynamic characteristic information that changes over time. For example, the video feature information of the first to-be-selected video may be a 256-dimensional feature vector. The video feature information of the second to-be-selected video may also include static feature information of the second to-be-selected video itself and dynamic feature information that changes over time. For example, the video feature information of the second to-be-selected video may also be a 256-dimensional feature vector.

All the first to-be-selected videos with the target music as background music can be acquired, and the video feature information of all the first to-be-selected videos is subjected to average processing, and the first video feature information corresponding to the target music is obtained. Similarly, for each candidate music, all the second to-be-selected videos having the candidate music as background music may be obtained, and the video feature information of all the second to-be-selected videos may be averaged to obtain the second video feature information corresponding to the candidate music. The cosine value between the target music and the candidate music may be determined as the music similarity between the target music and the candidate music according to the first video feature information and the second video feature information based on a cosine similarity calculation mode. The candidate music with the music similarity greater than the preset similarity threshold can be taken as the similar music corresponding to the target music, so that centering on the video, other music having the same using way as the target music can be more accurately identified, further improving the accuracy of music usage way matching.

For example, a plurality of first to-be-selected videos are provided, based on the video feature information of the first to-be-selected video corresponding to the target music, determining the first video feature information corresponding to the target music may include: based on video playing count information of each first to-be-selected video corresponding to the target music, screening the plurality of first to-be-selected videos, obtaining a preset number of third to-be-selected videos that are screened out; performing average processing on the video feature information corresponding to the preset number of third to-be-selected videos, and obtaining the first video feature information corresponding to the target music.

The video playing count information may refer to a total playing count or an average playing count of the video in a preset time period. For example, based on the video playing count information corresponding to each of the plurality of first to-be-selected videos, ranking the plurality of first to-be-selected videos according to the video playing count by high to low, and taking the top preset number of first to-be-selected videos from the ranked first to-be-selected videos as the third to-be-selected videos, so as to screen out the third to-be-selected videos which have more representative of the using way from the first to-be-selected videos. Performing vector average processing on the video feature information corresponding to all the third to-be-selected videos, and taking the obtained average feature vector as the first video feature information corresponding to the target music.

In the same way, a plurality of second to-be-selected videos are provided, based on the video feature information of the second to-be-selected video corresponding to each candidate music, determining the second video feature information corresponding to each candidate music, may include:
based on video playing count information of each second to-be-selected video corresponding to each candidate music, screening the plurality of second to-be-selected videos, obtaining a preset number of fourth to-be-selected videos that are screened out; performing average processing on the video feature information corresponding to the preset number of fourth to-be-selected videos, and obtaining the second video feature information corresponding to each candidate music. The embodiment can obtain more accurate first video feature information and second video feature information by screening the first to-be-selected video and the second to-be-selected video, which further improves the accuracy of music matching.

If there are at least two preset music dimensions, all similar music matched with the target music in each preset music dimension may be subjected to intersection processing, and the similar music matched with the target music in all preset music dimensions is taken as the similar music corresponding to the target music.

S730, based on the determined similar music, determining a first video.

After all similar music corresponding to the target music is acquired, a video with any one of the similar music as background music may be taken as the first video.

For example, S730 may include: ranking all similar music that is determined to obtain a similar music sequence; acquiring second music in the similar music sequence, and determining at least one first candidate video with the second music as background music; determining the first video from at least one first candidate video according to video playing information corresponding to each first candidate video.

For example, ranking all the similar music in descending order based on the music similarity between each similar music and the target music, and obtaining a similar music sequence in which the music similarity decreases in order. The first music in the similar music sequence may be taken as the second music, and all the first candidate videos with the second music as the background music are obtained, the first candidate video with the highest video playing count may be determined as the first video, i.e., the first candidate video with the highest hotness as the first video.

The determining operation of the first video of steps S710-S730 may be determined before step S740, may also be determined after step S750, and may also be determined in real time when the first video needs to be played, and the present embodiment does not limit the execution order of the determining operation of the first video. The determining operation of the first video may be performed locally in the client or remotely in the server and the determined first video is transmitted to the client for playing, and the subject of performing the determining operation of the first video is not particularly limited in this embodiment.

S740, presenting a target music page corresponding to the target music, wherein the target music page comprises a video recommendation control.

S750, in response to the trigger operation acting on the video recommendation control, playing the first video in the video recommendation page, wherein the first background music in the first video is similar music that matches the target music in a preset music dimension.

The technical solution of the embodiments of the present disclosure, by acquiring a plurality of candidate music, based on a preset music dimension, matching the target music with each candidate music to get a matching result, and based on the matching result, determining, from the plurality of candidate music, all similar music corresponding to the target music, based on all determined similar music, determining the first video, so that music similarity can be matched on the preset music dimension to meet the personalized needs of business.

On the basis of the above technical solution, before switching the first video to the third video in response to the first switching operation triggered on the first video, the method may further include:
determining the third video to be switched to based on all similar music corresponding to the target music, the first switching operation and the first background music.

For example, according to the sequence position of the first background music in the similar music sequence and the first switching operation, determining the third music in the similar music sequence, and determining at least one second candidate video with the third music as background music; determining a third video from the at least one second candidate video according to the video playing information corresponding to each second candidate video.

If the first switching operation represents an operation to switch to the next music video, such as the user swiping to the left or clicking on the second switching control, the next piece of music of the first background music may be determined to be the third music in the similar music sequence. Alternatively, if the first switching operation represents an operation to switch to the previous music video, such as the user swiping to the right or clicking on the first switching control, the last piece of music of the first background music may be determined to be the third music in the similar music sequence. All of the second candidate videos having the third music as the background music are obtained, and the second candidate video having the highest video playing count may be determined as the third video, i.e., the second candidate video with the highest popularity as the third video, so that the user may watch the third video having a different background music and the highest popularity.

On the basis of the above technical solution, before switching the first video to the fourth video, the method further includes: determining a fourth video based on all the first candidate videos and the first video.

When the videos with the same background music are switched by triggering the second switching operation, all the first candidate videos with the first background music can be ranked based on the video playing information corresponding to the first candidate videos, obtaining a ranked video sequence, such as a video sequence of which the video playing count decreases sequentially. A fourth video to switch to is determined based on the ranked video sequence, the second switching operation, and the first video. For example, if the second switching operation represents an operation of switching to a next video, such as a user swiping up, the next video of the first video may be determined to be the fourth video in the video sequence. Alternatively, if the second switching operation represents an operation of switching to the previous video, such as the user swiping down, the previous video of the first video may be determined as the fourth video in the video sequence, so that other videos with the same background music can be watched quickly by the user-triggered second switching operation, further improving the user viewing experience.

Fig. 11 is a structural diagram of a video playing apparatus provided by an embodiment of the present disclosure, and as shown in Fig. 11, the apparatus specifically includes: a target music page presentation module 810 and a first video playing module 820.

The target music page presentation module 810 is configured to present a target music page corresponding to target music, wherein the target music page comprises a video recommendation control; the first video playing module 820 is configured to play a first video in a video recommendation page in response to a trigger operation acting on the video recommendation control, wherein first background music in the first video is similar music matching the target music in a preset music dimension.

The technical solution provided by the embodiments of the present disclosure, by presenting a target music page corresponding to target music, the target music page including a video recommendation control, and in response to a trigger operation acting on the video recommendation control, playing a first video in the video recommendation page, the first background music in the first video being similar music matching the target music in a preset music dimension, so that by triggering the video recommendation control in the target music page, videos with background music similar to the target music can be played out quickly, without manual search, interactivity with users is enhanced, and user viewing experience is improved.

On the basis of the above technical solution, the target music page further comprises: a music card and at least one video control, wherein the music card is used to present target music information corresponding to the target music, and the video control is used to present a video thumbnail corresponding to a video with the target music as background music.

On the basis of the above technical solution, the video recommendation control is a control located in the music card.

On the basis of the above technical solution, the video recommendation control is a sub-control nested in a preset video control.

On the basis of the above technical solution, the apparatus further includes: a target video playing module, configured to, in response to a trigger operation acting on a target video thumbnail in a target video control, play a target video corresponding to the target video thumbnail, wherein a playing page of the target video includes a first playlist control; a first presentation module, configured to, in response to a trigger operation acting on the first playlist control, present a playlist, wherein each music in the playlist is similar music that matches the target music in the preset music dimension.

On the basis of the above technical solution, the apparatus further includes: a second video playing module configured to play a second video in the video recommendation page in response to a trigger operation acting on a first recommendation control corresponding to first music in the playlist after presenting the playlist, wherein second background music in the second video is the first music.

On the basis of the above technical solution, the video recommendation page includes: a second playlist control. The apparatus also includes a second presentation module configured to present a list of playlists in response to a trigger operation on the second playlist control, wherein each music in the playlist is similar music that matches the target music in the preset music dimension.

On the basis of the above technical solution, the apparatus further includes: a third video playing module configured to, after playing the first video, switch the first video to a third video and play the third video in response to a first switching operation triggered on the first video, wherein third background music in the third video is similar music that matches the target music in a preset music dimension and is different from the first background music.

On the basis of the above technical solutions, the third video playing module is configured to switch the first video to a third video by following steps: in response to a swipe operation of a first preset direction triggered on the first video, switching the first video to a third video corresponding to the first preset direction; or, in response to a swipe operation of a second preset direction triggered on the first video, switching the first video to a third video corresponding to the second preset direction.

On the basis of the above technical solution, the video recommendation page includes: a first switching control and a second switching control, wherein the first switching control and the second switching control correspond to different video switching directions; a third video playing module configured to switch the first video to a third video by following steps: in response to a trigger operation acting on the first switching control, switching the first video to a third video corresponding to the first switching control; or, in response to a trigger operation acting on the second switching control, switching the first video to a third video corresponding to the second switching control.

On the basis of the above technical solution, the apparatus further includes: a fourth video playing module configured to, in response to a second switching operation triggered on the first video, switch the first video to a fourth video, and play the fourth video, wherein background music in the fourth video is the first background music.

On the basis of the above technical solution, a fourth video playing module configured to switch the first video to a fourth video by following steps: in response to a swipe operation of a third preset direction triggered on the first video, switching the first video to a fourth video corresponding to the third preset direction; or, in response to a swipe operation of a fourth preset direction triggered on the first video, switching the first video to a fourth video corresponding to the fourth preset direction.

On the basis of the above technical solution, the preset music dimension includes: a music using way dimension, a music style dimension, or a music creator dimension.

On the basis of the above technical solution, the apparatus further includes a candidate music obtaining module configured to obtain a plurality of candidate music before playing the first video; a music matching module configured to match the target music with each candidate music to obtain a matching result based on the preset music dimension, and determine similar music corresponding to the target music from the plurality of candidate music based on the matching result; a first video determination module configured to determine a first video based on the determined similar music.

On the basis of the above technical solution, the first video determination module is configured to determine the first video by following steps: ranking all similar music that is determined to obtain a similar music sequence; acquiring second music in the similar music sequence, and determining at least one first candidate video with the second music as background music; determining the first video from the at least one first candidate video according to video playing information corresponding to each first candidate video.

On the basis of the above technical solution, when the preset music dimension is a music using way dimension, the music matching module is configured to determine similar music corresponding to the target music from the plurality of candidate music by following steps: acquiring a first to-be-selected video with the target music as background music, and a second to-be-selected video with each candidate music as background music; based on video feature information of the first to-be-selected video corresponding to the target music, determining first video feature information corresponding to the target music; based on video feature information of the second to-be-selected video corresponding to each candidate music, determining second video feature information corresponding to each candidate music; determining a music similarity between the target music and each candidate music based on the first video feature information and the second video feature information; determining the similar music corresponding to the target music from the plurality of candidate music based on the music similarity.

On the basis of the above technical solution, the candidate music obtaining module is configured to obtain a plurality of candidate music by following steps: based on a music playback count corresponding to each music in a music library, screening out a plurality of to-be-selected music from the music library; based on music playing information corresponding to each to-be-selected music, determining candidate music having a common using way from the plurality of to-be-selected music..

The video playing device provided by the embodiment of the present disclosure can execute the video playing method provided by any embodiment of the present disclosure and has corresponding functional modules and effects of the executing method.

It is to be noted that a plurality of units and modules included in the above apparatus are divided only according to functional logic, but are not limited to the above division as long as the corresponding functions can be realized; In addition, the specific name of each functional unit is also merely for convenience to distinguish from each other, and is not used to limit the protection scope of the embodiments of the present disclosure.

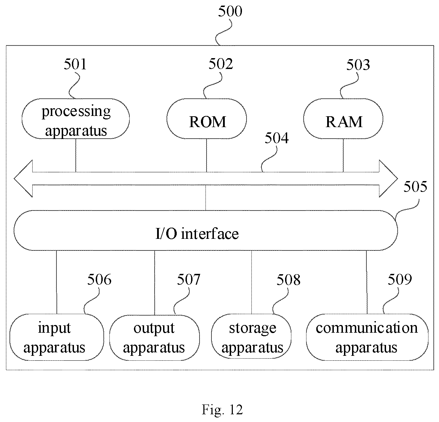

Fig. 12 is a structural schematic diagram of an electronic device provided by an embodiment of the present disclosure. Reference is now made to Fig. 12, which shows a structural schematic diagram of an electronic device (for example, a terminal device or a server in Fig. 12) 500 suitable for implementing an embodiment of the present disclosure. The terminal devices in the embodiments of the present disclosure may include, but not limited to, mobile terminals such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal) and the like, and fixed terminals such as a digital TV, a desktop computer and the like. The electronic device shown in Fig. 12 is only an example and should not bring any limitation to the functions and application scope of the embodiments of the present disclosure.

As shown in Fig. 12, the electronic device 500 may include a processing apparatus (for example, a central processing unit, a graphics processing unit, etc.) 501, which may perform various appropriate actions and processes according to programs stored in a read-only memory (ROM) 502 or programs loaded from a storage apparatus 508 into a random access memory (RAM) 503. In the RAM 503, various programs and data required for operations of the electronic device 500 are also stored. The processing apparatus 501, the ROM 502 and the RAM 503 are connected to each other through a bus 504. An input/output (I/O) interface 505 is also connected to the bus 504.

Generally, the following apparatuses may be connected to the I/O interface 505: an input apparatus 506 including, for example, a touch screen, a touch pad, a keyboard, a mouse, a camera, a microphone, an accelerometer, a gyroscope, etc.; an output apparatus 507 including, for example, a liquid crystal display (LCD), a speaker, a vibrator, etc.; a storage apparatus 508 including, for example, a magnetic tape, a hard disk, etc.; and a communication apparatus 509. The communication apparatus 509 may allow the electronic device 500 to perform wireless or wired communication with other devices to exchange data. While the electronic device 500 with various apparatuses is shown in Fig. 12, it should be understood that it is not required to implement or have all the apparatuses shown. More or fewer apparatuses may alternatively be implemented or provided.

According to the embodiments of the present disclosure, processes described above with reference to the flowchart may be implemented as a computer software program. For example, an embodiment of the present disclosure includes a computer program product, which includes a computer program carried on a non-transitory computer-readable medium, the computer program including program codes for performing the method shown in the flowchart. In such an embodiment, the computer program may be downloaded and installed from a network through the communication apparatus 509, or installed from the storage apparatus 508, or installed from the ROM 502. When the computer program is executed by the processing apparatus 501, the above functions defined in the method of the embodiment of the present disclosure are performed.

The names of messages or information exchanged between apparatuses in the embodiments of the present disclosure are for illustrative purposes only, and are not intended to limit the scope of the messages or information.

The electronic device provided by the embodiment of the present disclosure belongs to the same disclosed concept as the video playing method provided by the embodiment above, technical details that are not described in detail in the present embodiment can be referred to the embodiments above, and the present embodiment has the same advantageous effects as the embodiments above.

An embodiment of the present disclosure provides a computer storage medium having stored thereon a computer program, which, when executed by a processor, implement the video playing method provided in the embodiment above.

It should be noted that the computer-readable medium mentioned above in the present disclosure may be a computer-readable signal medium or a computer-readable storage medium or any combination of both. The computer-readable storage medium may be, for example, but not limited to, an electrical, magnetic, optical, electromagnetic, infrared, or semiconductor system, apparatus or device, or a combination of any of the above. More specific examples of the computer-readable storage medium may include, but not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program, which program may be used by or in combination with an instruction execution system, apparatus or device. In the present disclosure, the computer-readable signal medium may include a data signal propagated in a baseband or as part of a carrier wave, in which computer-readable program codes are carried. This propagated data signal may take multiple forms, including but not limited to electromagnetic signals, optical signals or any suitable combination of the above. The computer-readable signal medium may also be any computer-readable medium other than the computer-readable storage medium, and may send, propagate or transmit a program used by or in combination with an instruction execution system, apparatus or device. The program codes contained in the computer-readable medium may be transmitted by any suitable medium, including but not limited to: electric wires, optical cables, radio frequency (RF) and the like, or any suitable combination of the above.

In some implementations, the client and the server can communicate by using any currently known or future developed network protocol such as a hypertext transfer protocol (HTTP), and may be interconnected with digital data communication in any form or medium (for example, a communication network). Examples of the communication network include a local area network ("LAN"), a wide area network ("WAN"), the Internet work (for example, the Internet) and an end-to-end network (for example, an ad hoc end-to-end network), as well as any currently known or future developed networks.

The computer-readable medium described above may be included in the electronic device; or it may exist alone without being assembled into the electronic device.

The computer-readable medium carries one or more programs which, when executed by the electronic device, cause the electronic device to: present a target music page corresponding to target music, wherein the target music page comprises a video recommendation control; play a first video in a video recommendation page in response to a trigger operation acting on the video recommendation control, wherein first background music in the first video is similar music matching the target music in a preset music dimension.

Computer program codes for performing the operations of the present disclosure may be written in one or more programming languages or combinations thereof, including but not limited to object-oriented programming languages such as Java, Smalltalk and C++, and conventional procedural programming languages such as "C" or similar programming languages. The program codes may be completely executed on a user computer, partially executed on the user computer, executed as an independent software package, partially executed on the user computer and partially executed on a remote computer, or completely executed on the remote computer or a server. In the case involving the remote computer, the remote computer may be connected to the user computer through any type of network, including a local area network (LAN) or a wide area network (WAN), or may be connected to an external computer (for example, through the Internet using an Internet service provider).

The flowchart and block diagrams in the drawings illustrate architectures, functions and operations of possible implementations of the systems, methods and the computer program product according to various embodiments of the present disclosure. In this regard, each block in the flowchart or block diagram may represent a part of a module, a program segment, or codes, which includes one or more executable instructions for implementing specified logical functions. It is also noted that, in some alternative implementations, the functions noted in the block may occur out of the order noted in the figures. For example, two blocks shown in succession may, in fact, be executed substantially in parallel, and may sometimes be executed in the reverse order, depending on the functions involved. It is also noted that each block in the block diagrams and/or flowcharts, and combinations of blocks in the block diagrams and/or flow diagrams, may be implemented by a dedicated hardware-based system that performs specified functions or operations, or by a combination of dedicated hardware and computer instructions.

The units involved in the embodiments described in the present disclosure may be implemented by software or hardware. The name of the unit does not constitute a limitation on the unit itself in some cases. For example, a first acquisition unit can also be described as "a unit that acquires at least two Internet protocol addresses".

The functions described above herein may be at least partially performed by one or more hardware logic components. For example, without limitation, exemplary types of hardware logic components that may be used include: a field programmable gate array (FPGA), an application-specific integrated circuit (ASIC), an application specific standard product (ASSP), a system-on-chip (SOC), a complex programmable logic device (CPLD) and the like.

In the context of the present disclosure, the machine-readable medium may be a tangible medium that may include or store a program used by or in connection with an instruction execution system, apparatus or device. The machine-readable medium may be a machine-readable signal medium or a machine-readable storage medium. The machine-readable medium may include, but not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, Example 1 provides a video playing method, including: presenting a target music page corresponding to target music, wherein the target music page comprises a video recommendation control; in response to a trigger operation acting on the video recommendation control, playing a first video in a video recommendation page, wherein first background music in the first video is similar music that matches the target music in a preset music dimension.

According to one or more embodiments of the present disclosure, Example 2 provides a video playing method, further including: optionally, the target music page further includes: a music card and at least one video control, wherein the music card is used to present target music information corresponding to the target music, and the at least one video control is used to present a video thumbnail corresponding to a video with the target music as background music.

According to one or more embodiments of the present disclosure, Example 3 provides a video playing method, further including: optionally, the video recommendation control is a control located in the music card.

According to one or more embodiments of the present disclosure, Example 4 provides a video playing method, further including: optionally, the video recommendation control is a sub-control nested in a preset video control.

According to one or more embodiments of the present disclosure, Example 5 provides a video playing method, further including: optionally, the method further includes: in response to a trigger operation acting on a target video thumbnail in a target video control, playing a target video corresponding to the target video thumbnail, wherein a playing page of the target video comprises a first playlist control; in response to a trigger operation acting on the first playlist control, presenting a playlist , wherein each music in the playlist is the similar music that matches the target music in the preset music dimension.

According to one or more embodiments of the present disclosure, Example 6 provides a video playing method, further including: optionally, after presenting the playlist, the method further including: in response to a trigger operation acting on a first recommendation control corresponding to first music in the playlist, playing a second video in the video recommendation page, wherein second background music in the second video is the first music.

According to one or more embodiments of the present disclosure, Example 7 provides a video playing method, further including: optionally, the video recommendation page includes: a second playlist control; the method further includes: in response to a trigger operation acting on the second playlist control, presenting a playlist, wherein each music in the playlist is the similar music that matches the target music in the preset music dimension.

According to one or more embodiments of the present disclosure, Example 8 provides a video playing method, further including: optionally, after playing the first video, further including: in response to a first switching operation on the first video, switching the first video to a third video and playing the third video, wherein third background music in the third video is similar music that matches the target music in the preset music dimension and is different from the first background music.

According to one or more embodiments of the present disclosure, Example 9 provides a video playing method, further including: optionally, in response to the first switching operation on the first video, switching the first video to the third video, includes: in response to a swipe operation of a first preset direction on the first video, switching the first video to a third video corresponding to the first preset direction; or, in response to a swipe operation of a second preset direction on the first video, switching the first video to a third video corresponding to the second preset direction.

According to one or more embodiments of the present disclosure, Example 10 provides a video playing method, further including: optionally, the video recommendation page includes: a first switching control and a second switching control, the first switching control and the second switching control corresponding to different video switching directions; in response to the first switching operation on the first video, switching the first video to the third video, includes: in response to a trigger operation acting on the first switching control, switching the first video to a third video corresponding to the first switching control; or, in response to a trigger operation acting on the second switching control, switching the first video to a third video corresponding to the second switching control.

According to one or more embodiments of the present disclosure, Example 11 provides a video playing method, further including: optionally, in response to a second switching operation triggered on the first video, switching the first video to a fourth video, and playing the fourth video, wherein background music in the fourth video is the first background music.

According to one or more embodiments of the present disclosure, Example 12 provides a video playing method, further including: optionally, in response to the second switching operation triggered on the first video, switching the first video to the fourth video, includes: in response to a swipe operation of a third preset direction triggered on the first video, switching the first video to a fourth video corresponding to the third preset direction; or, in response to a swipe operation of a fourth preset direction triggered on the first video, switching the first video to a fourth video corresponding to the fourth preset direction.

According to one or more embodiments of the present disclosure, Example 13 provides a video playing method, further including: optionally, the preset music dimension includes a music using way dimension, a music style dimension, or a music creator dimension.

According to one or more embodiments of the present disclosure, Example 14 provides a video playing method, further including: optionally, before playing the first video, further including: acquiring a plurality of candidate music; based on the preset music dimension, matching the target music with each candidate music to obtain a matching result, and based on the matching result, determining similar music corresponding to the target music from the plurality of candidate music; based on the similar music that is determined, determining the first video.

According to one or more embodiments of the present disclosure, Example 15 provides a video playing method, further including: optionally, based on the similar music that is determined, determining the first video, includes: ranking all similar music that is determined to obtain a similar music sequence; acquiring second music in the similar music sequence, and determining at least one first candidate video with the second music as background music; determining the first video from the at least one first candidate video according to video playing information corresponding to each first candidate video.

According to one or more embodiments of the present disclosure, Example 16 provides a video playing method, further including: optionally, when the preset music dimension is a music using way dimension, based on the preset music dimension, matching the target music with each candidate music to obtain the matching result, and based on the matching result, determining the similar music corresponding to the target music from the plurality of candidate music, includes: acquiring a first to-be-selected video with the target music as background music, and a second to-be-selected video with each candidate music as background music; based on video feature information of the first to-be-selected video corresponding to the target music, determining first video feature information corresponding to the target music; based on video feature information of the second to-be-selected video corresponding to each candidate music, determining second video feature information corresponding to each candidate music; determining a music similarity between the target music and each candidate music based on the first video feature information and the second video feature information; determining the similar music corresponding to the target music from the plurality of candidate music based on the music similarity.

According to one or more embodiments of the present disclosure, Example 17 provides a video playing method, further including: optionally, acquiring the plurality of candidate music, includes: based on a music playback count corresponding to each music in a music library, screening out a plurality of to-be-selected music from the music library; based on music playing information corresponding to each to-be-selected music, determining candidate music having a common using way from the plurality of to-be-selected music.

According to one or more embodiments of the present disclosure, Example 18 provides a video playing apparatus, including: a target music page presentation module, configured to present a target music page corresponding to target music, wherein the target music page comprises a video recommendation control; a first video playing module, configured to play a first video in a video recommendation page in response to a trigger operation acting on the video recommendation control, wherein first background music in the first video is similar music matching the target music in a preset music dimension.

## Claims

1. A video playing method, comprising:
presenting a target music page corresponding to target music, wherein the target music page comprises a video recommendation control;
in response to a trigger operation acting on the video recommendation control, playing a first video in a video recommendation page, wherein first background music in the first video is similar music that matches the target music in a preset music dimension.

2. The video playing method according to claim 1, wherein the target music page further comprises: a music card and at least one video control, wherein the music card is used to present target music information corresponding to the target music, and the video control is used to present a video thumbnail corresponding to a video with the target music as background music.

3. The video playing method according to claim 2, wherein the video recommendation control is a control located in the music card.

4. The video playing method according to claim 2, wherein the video recommendation control is a sub-control nested in a preset video control.

5. The video playing method according to claim 2, further comprising:
in response to a trigger operation acting on a target video thumbnail in a target video control, playing a target video corresponding to the target video thumbnail, wherein a playing page of the target video comprises a first playlist control;
in response to a trigger operation acting on the first playlist control, presenting a playlist, wherein each music in the playlist is similar music that matches the target music in a preset music dimension.

6. The video playing method according to claim 5, after presenting the playlist, further comprising:
in response to a trigger operation acting on a first recommendation control corresponding to first music in the playlist, playing a second video in the video recommendation page, wherein second background music in the second video is the first music.

7. The video playing method according to claim 1, wherein the video recommendation page comprises: a second playlist control;
the method further comprises:
in response to a trigger operation acting on the second playlist control, presenting a playlist, wherein each music in the playlist is similar music that matches the target music in a preset music dimension.

8. The video playing method according to claim 1, after playing the first video, further comprising:
in response to a first switching operation on the first video, switching the first video to a third video and playing the third video, wherein third background music in the third video is similar music that matches the target music in a preset music dimension and is different from the first background music.

9. The video playback method of claim 8, wherein, in response to the first switching operation on the first video, switching the first video to the third video, comprises:
in response to a swipe operation of a first preset direction on the first video, switching the first video to a third video corresponding to the first preset direction; or,
in response to a swipe operation of a second preset direction on the first video, switching the first video to a third video corresponding to the second preset direction.

10. The video playing method according to claim 8, wherein the video recommendation page comprises: a first switching control and a second switching control, the first switching control and the second switching control corresponding to different video switching directions;
in response to the first switching operation on the first video, switching the first video to the third video, comprises:
in response to a trigger operation acting on the first switching control, switching the first video to a third video corresponding to the first switching control; or,
in response to a trigger operation acting on the second switching control, switching the first video to a third video corresponding to the second switching control.

11. The video playing method according to claim 1, further comprising:
in response to a second switching operation triggered on the first video, switching the first video to a fourth video, and playing the fourth video, wherein background music in the fourth video is the first background music.

12. The video playing method according to claim 11, wherein in response to the second switching operation triggered on the first video, switching the first video to the fourth video, comprises:
in response to a swipe operation of a third preset direction triggered on the first video, switching the first video to a fourth video corresponding to the third preset direction; or,
in response to a swipe operation of a fourth preset direction triggered on the first video, switching the first video to a fourth video corresponding to the fourth preset direction.

13. The video playing method according to claim 1, wherein the preset music dimension comprises a music using way dimension, a music style dimension, or a music creator dimension.

14. The video playing method according to claim 1, before playing the first video, further comprising:
acquiring a plurality of candidate music;
based on the preset music dimension, matching the target music with each candidate music to obtain a matching result, and based on the matching result, determining similar music corresponding to the target music from the plurality of candidate music;
based on the similar music that is determined, determining the first video.

15. The video playback method of claim 14, wherein based on the similar music that is determined, determining the first video, comprises:
ranking all similar music that is determined to obtain a similar music sequence;
acquiring second music in the similar music sequence, and determining at least one first candidate video with the second music as background music;
determining the first video from the at least one first candidate video according to video playing information corresponding to each first candidate video.

16. The video playing method according to claim 14, wherein when the preset music dimension is a music using way dimension, based on the preset music dimension, matching the target music with each candidate music to obtain the matching result, and based on the matching result, determining the similar music corresponding to the target music from the plurality of candidate music, comprises:
acquiring a first to-be-selected video with the target music as background music, and a second to-be-selected video with each candidate music as background music;
based on video feature information of the first to-be-selected video corresponding to the target music, determining first video feature information corresponding to the target music;
based on video feature information of the second to-be-selected video corresponding to each candidate music, determining second video feature information corresponding to each candidate music;
determining a music similarity between the target music and each candidate music based on the first video feature information and the second video feature information;
determining the similar music corresponding to the target music from the plurality of candidate music based on the music similarity.

17. The video playing method according to claim 16, wherein acquiring the plurality of candidate music, comprises:
based on a music playback count corresponding to each music in a music library, screening out a plurality of to-be-selected music from the music library;
based on music playing information corresponding to each to-be-selected music, determining candidate music having a common using way from the plurality of to-be-selected music.

18. A video playing apparatus, comprising:
a target music page presentation module, configured to present a target music page corresponding to target music, wherein the target music page comprises a video recommendation control;
a first video playing module, configured to play a first video in a video recommendation page in response to a trigger operation acting on the video recommendation control, wherein first background music in the first video is similar music matching the target music in a preset music dimension.

19. An electronic device, comprising:
at least one processor;
a storage apparatus configured to store at least one program,
the at least one program, when executed by the at least one processor, causes the at least one processor to implement the video playing method according to any one of claims 1-17.

20. A storage medium comprising computer-executable instructions for performing the video playing method according to any one of claims 1-17 when executed by a computer processor.
